# EUROPEAN PATENT SPECIFICATION

(11) **EP 2 692 793 B1**
(45) Date of publication and mention of the grant of the patent: **14.09.2016**
(21) Application number: 12764721.2
(22) Date of filing: 30.03.2012
(51) Int. Cl.: B32B 9/00, B32B 27/20, B32B 9/04, B32B 27/32, C04B 35/634, C09D 123/02, C08K 3/04, C04B 41/00, C04B 41/63, B32B 15/085, B32B 18/00, C08J 5/18, C08L 23/02, C08K 3/22

(54) **POLYOLEFIN RESIN COMPOSITION MOLDED BODY HAVING HIGH SCRATCH RESISTANCE**
FORMKÖRPER AUS EINER POLYOLEFINHARZZUSAMMENSETZUNG MIT HOHER KRATZFESTIGKEIT
CORPS MOULÉ DE COMPOSITION DE RÉSINE POLYOLÉFINE POSSÉDANT UNE RÉSISTANCE ÉLEVÉE À LA RAYURE

(30) Priority: 31.03.2011 JP 2011079377
(43) Date of publication of application: 05.02.2014
(73) Proprietor: UBE Industries, Ltd., Yamaguchi 755-8633 (JP)
(72) Inventor: AKOU, Tatsushi, Sakai-shi Osaka 592-8543 (JP); KITA, Yasuo, Sakai-shi Osaka 592-8543 (JP); KASATANI, Masuhiro, Sakai-shi Osaka 592-8543 (JP)
(74) Representative: Beckmann, Claus
(86) International application number: PCT/JP2012/058612
(87) International publication number: WO 2012/133789

(56) References cited:
- EP-A2- 2 191 961
- WO-A1-03/089500
- WO-A1-03/095531
- WO-A2-01/77215
- JP-A- 1 168 737
- JP-A- 11 157 001
- JP-A- 2005 139 421
- US-A1- 2003 059 591
- US-A1- 2004 130 052
- US-A1- 2008 075 962
- US-A1- 2009 062 447
- US-B1- 6 779 577
- DATABASE WPI Week 200301 Thomson Scientific, London, GB; AN 2003-003525 XP002728552, -& JP 2002 209453 A (CI KASEI CO LTD) 30 July 2002 (2002-07-30)
- DATABASE WPI Week 199848 Thomson Scientific, London, GB; AN 1998-563296 XP002728553, & JP H10 251466 A (CALP KOGYO KK) 22 September 1998 (1998-09-22)

## Description

### FIELD OF THE INVENTION

The present invention relates to a polyolefin resin composition and further to a molded article produced from the polyolefin resin composition. From another aspect, the invention relates to a polyolefin resin composition article or a polyolefin resin composition coat layer which shows high resistance to scratches and further a polyolefin resin composition favorably employable for producing the resin article or coat layer.

### BACKGROUND OF THE INVENTION

A polyolefin resin composition comprising a polyolefin, various pigments (e.g., white pigment and black pigment), and optionally a chromatic pigment and a number of additives has been widely utilized for producing a variety of vessels, materials of forming interior and exterior members of a variety of articles (e.g., articles for daily use, electric appliances, automotive parts, and construction parts), or sheet-like materials. Further, the polyolefin resin composition has been utilized for coating metallic articles or ceramic articles (e.g., concrete articles) to improve its appearance or visually shielding rough or uneven surface thereof, whereby rendering the roughness or unevenness of the surface unnoticeable.

Chromatic polyolefin resin articles have been used for a variety of uses. If the chromatic polyolefin resin articles are used for a long period of time or even if the chromatic polyolefin resin articles are used in a short period of time under such conditions that the resin articles are repeatedly brought into contact with other materials, particularly, hard materials such as metallic materials and ceramic materials (e.g., glass, concrete material) or placed in contact with other materials under high pressure, the chromatic polyolefin resin articles get scratched on their surfaces. If the chromatic resin article gets scratched on its surface, there is produced difference of lightness and color difference between the scratched area and unscratched area, and hence the production of scratch is made very noticeable and the appearance of the scratched resin article becomes markedly worse.

D1 (JP 2007-291402 A) discloses that polyolefin resin articles containing various pigments (particularly, used polyolefin resin articles) can be favorably recycled after having been pulverized and mixed with a white pigment (particularly, white titanium dioxide pigment) and a chromatic pigment in the specific amounts, and then melt-moulded to produce a polyolefin resin article showing good colored appearance which is essentially equivalent to a polyolefin resin article produced from fresh polyolefin resin (i.e., virgin polyolefin resin). However, D1 is silent with respect to resistance to scratch of the polyolefin resin article and the question if natures and amounts of the added white pigment and chromatic pigment affect the appearance of the scratched area.

US 2008/075962 A1 describes a polyolefin-based resin composition for metal coating, which is said to be excellent in separation resistance, weather resistance and corrosion resistance, which can be industrially produced without difficulty even by an existing apparatus, and is assured of excellent scratch resistance without using a surface coating agent; a resin film using the composition; and a resin-coated metal material. The polyolefin-based resin composition for metal coating comprises at least (A) a polyolefin-based resin, (B) a layered inorganic material, (C) an olefin-based oligomer containing a functional group having polarity and (D) a rubber-like elastic material.

### SUMMARY OF THE INVENTION

It is an object of the present invention to provide a polyolefin resin composition which can give articles or coat layers having high resistance to scratches, notwithstanding the olefin resin composition comprises unused polyolefin resin (i.e., virgin polyolefin resin) or used polyolefin resin (i.e., recycled polyolefin) collected from waste thermoplastic polyolefin resin articles. In the specification, the "resistance to scratch(es)" means not only resistance to suffering scratch(es) but also tendency visually shielding production of scratch(es) when the material gets scratched on its surface.

The inventors of the invention got an idea that the scratches produced on the surfaces of articles and coat layers of polyolefin resin composition produced from a polyolefin resin composition comprising a polyolefin resin and pigments might be visually shielded by adjusting natures and amounts of the incorporated pigments, and performed various experiments based on the idea. As a result, they have found that the scratches produced on the surfaces of the article or coat layer can be scarcely noticed if the article or coat layer is produced from a polyolefin resin composition containing a white titanium dioxide pigment and a black pigment such as carbon black or iron black in amounts larger than the conventionally adopted amounts and, optionally, a chromatic pigment after melting the resin composition under heating.

The present invention has been made based on the above-mentioned inventors' new finding.

As the first aspect, there is provided the polypropylene resin composition defined in claim 1.

As the second aspect, there is provided the article defined in claim 5.

As the third aspect, there is provided the composite material defined in claim 9.

### EFFECTS OF THE INVENTION

If the articles or coat layers (or coat films) on a variety of substrates produced from a polyolefin (i.e. polypropylene) resin composition of the invention suffer scratches on their surfaces, the surfaces show little difference of lightness and little color difference between in the scratched area and in the surrounding unscratched area. Therefore, the scratches are scarcely noticed. The inventors understand that the above-mentioned decrease of the difference of lightness and color difference is caused by suitable light shielding owing to the titanium dioxide pigment and black pigment incorporated in the resin composition article in the specific amounts and hence the whitened area (caused by ply separation, micro-crazing., production of micro extended resin area, etc.) produced in the vicinity of the scratches is kept from noticing. Accordingly, the lifetime of the article or coat layer of a substrate which is produced from a polyolefin resin composition of the invention is prolonged. Moreover, the articles and coat layers produced from a polyolefin resin composition of the invention can be employed for the uses in which the articles and coat layers necessarily encounter severe conditions frequently suffering scratches and hence polyolefin resin compositions have not been used previously.

### PREFERRED EMBODIMENTS OF THE INVENTION

Preferred embodiments of the invention (especially of the composite material defined in claim 9) are described below.
(1) The amount of the white titanium dioxide pigment is in the range of 1.5 to 6 weight parts, per 100 weight parts of the polyolefin resin.
(2) The black pigment comprises carbon black and the carbon black is contained in an amount of 0.1 to 1.0 weight part, per 100 weight parts of the polyolefin resin.
(3) The black pigment comprises iron black and the iron black is contained in an amount of 1.0 to 5 weight parts, per 100 weight parts of the polyolefin resin.
(4) The total amount of the white titanium dioxide pigment and black pigment is in the range of 3.0 to 7.0 weight parts, per 100 weight parts of the polyolefin resin.
(5) The polyolefin resin composition further contains a chromatic pigment in an amount of 0.05 to 3.0 weight parts, preferably in an amount of 0.5 to 3.0 weight parts.
(6) The polyolefin resin is virgin polyolefin resin.
(7) The polyolefin resin is a polyolefin resin obtained from a waste polyolefin resin article.

The various components of the polyolefin resin composition of the invention or of the polyolefin resin composition used in the composite material of the invention are described below in more detail.

### [Polyolefin resin]

Examples of the polyolefin resins include polypropylene and polyethylene. Polypropylene is favorably used. Most of the commercially available and generally employed polypropylenes for production of articles are block copolymers comprising a major amount of propylene and a minor amount of ethylene (i.e., propylene-ethylene block copolymer). Accordingly, the polypropylene favorably employable in the invention is the propylene-ethylene block copolymer.

The polyolefin resin can be unused polyolefin resin (generally called virgin polyolefin resin or virgin material). The virgin polyolefin resin may contain a small amount of an additive for the resinous material. The polyolefin resin may be material (generally called "recycling material) obtained by pulverization of articles rejected in the producing procedures or material obtained by pulverization of articles (e.g., automotive interior parts, automotive exterior parts, parts of electric appliance, office equipment) which have been previously used and disposed.

### [White titanium dioxide pigment]

There are no specific limitations with respect to the white titanium dioxide pigment employed in the invention. It is preferred, however, that rutile titanium dioxide or anatase titanium dioxide which is generally employed in various fields. It is one characteristic feature that the white titanium dioxide pigment is used in such a large amount as 1.1 to 6 weight parts, preferably 1.2 to 6 weight parts, more preferably 1.5 to 6 weight parts, per 100 weight parts of the polyolefin resin.

### [Black pigment]

The black pigment employed in the invention can be carbon black or iron black. The black pigment can be used in an amount of 0.1 to 5 weight parts per 100 weight parts of the polyolefin resin. The black pigment and white titanium dioxide pigment should be used in a total amount of 2.0 weight parts or more, per 100 weight parts of the polyolefin resin. Carbon black and iron black can be used singly or in combination.

Among the black pigments, carbon black shows high light-shielding effect. Accordingly, carbon black can be favorably employed for efficiently shielding scratches. There is such problem, however, that fine carbon black tends to agglomerate and cannot be easily handled.

In the case that the material is the pulverized waste resin material most of which contain pulverized thermosetting resin material or various impurities, black pigment comprising high light-shielding carbon black is favorably employed for improve the appearance of the resulting resin article or light-shielding the impurities in the resulting resin article. On the other hand, iron black may be preferable in view of its high dispersibility and its appropriate power of good balancing with white titanium dioxide pigment and chromatic pigment. Therefore, iron black is favorably employed singly or in combination with a relatively small amount of carbon black if the virgin polyolefin resin composition is used and improved light-shielding of scratches is expected.

Carbon black can be favorably employed in a ratio of 0.01 to 0.30 in terms of the ratio of an amount per the amount of white titanium dioxide pigment (i.e., carbon black/white titanium dioxide pigment). On the other hand, iron black can be favorably employed in a ratio of 0.1 to 3 in terms of the ratio of an amount per the amount of white titanium dioxide pigment (i.e., iron black/white titanium dioxide pigment).

The polyolefin resin composition of the invention may contain a chromatic pigment in addition to the white titanium dioxide pigment and black pigment. Examples of the chromatic pigments include inorganic chromatic pigments such as iron oxide red, ultramarine blue, cobalt blue, titanium yellow, cobalt yellow and cobalt green and organic chromatic pigments such as quinacridone red, polyazo yellow, anthraquinone red, anthraquinone yellow, polyazo red, azolake yellow, phthalocyanine blue, phthalocyanine green, isoindolinone yellow, permanent red, para red, toluidine maroon, benzidine yellow, first sky blue and brilliant carmine 6B. These pigments can be used singly or in combination, in consideration of their uses.

It is preferred that the polyolefin resin composition of the invention contains both of the white titanium dioxide pigment and black pigment under well uniformly dispersed conditions. For this purpose, the polyolefin composition preferably contains such known dispersants as higher fatty acid, higher fatty amide, higher fatty metal acid (metal soap), glycerol ester, polyethylene wax and polypropylene wax. Most preferred dispersant is magnesium stearate.

The polyolefin resin composition of the invention may further contain various elastomers and known additives. Examples of the known additives include fillers (e.g., talc), lubricants, antistatic agents, surface active agents, nucleating agents, UV absorbers, oxidation inhibitors and flame retardants.

The polyolefin resin composition of the invention can be employed for the production of such articles as interior parts of automotives such as motor cars, trucks, and motor busses, exterior parts of electric appliances such as vacuum cleaners and electric washing machines, household furniture, office equipments, and daily necessaries. Further, the polyolefin resin composition of the invention can be favorably employed for forming a coat layer formed on the surfaces of metallic substrates and ceramic substrates (e.g., concrete substrates for construction).

The polyolefin resin composition of the invention can be employed for producing sheet materials ordinarily having a thickness in the range of 0.5 to 6 mm, particularly 1 to 4 mm, more particularly 1.5 to 3.5 mm. The polyolefin resin composition also can be used for covering the surfaces of metallic substrates or ceramic substrates. The covering layer can have thickness in the same range.

### EXAMPLES

### [Example 1] - Preparation of gray sheet material from virgin material

One hundred weight parts of polypropylene resin (fresh propylene-ethylene block copolymer: virgin material) were mixed with a white titanium dioxide pigment (4.40 weight parts), iron black (1.44 weight parts), a red pigment (iron oxide red: 0.08 weight part), a yellow pigment (titanium yellow: 0.56 weight part), a blue pigment (ultramarine blue: 0.40 weight part) and other additives (dispersant, lubricant, etc.: 0.30 weight part in total). The mixture was melted under heating and injected to prepare a gray test piece having embossed surface (color plate, 100 mm x 100 mm x 3.35 mm).

### [Example 2] - Preparation of gray sheet material from virgin material

The procedures of Example 1 were repeated except for using no chromatic pigments (red pigment, yellow pigment and blue pigment), to prepare a gray test piece having embossed surface.

### [Comparison Example 1] - Preparation of gray sheet material from virgin material

The procedures of Example 1 were repeated except that the amounts of pigments were changed to 0.55 weight part for the white titanium dioxide pigment, 0.18 weight part for the iron black, 0.01 weight part for the red pigment, 0.07 weight part for the yellow pigment and 0.05 weight part for the blue pigment, to prepare a gray test piece having embossed surface.

### [Example 3] - Preparation of brown sheet material from virgin material

One hundred weight parts of polypropylene resin (fresh propylene-ethylene block copolymer: virgin material) were mixed with a white titanium dioxide pigment (1.92 weight parts), iron black (2.80 weight parts), a red pigment (iron oxide red: 0.48 weight part), a yellow pigment (titanium yellow: 1.28 weight parts), a blue pigment (ultramarine blue: 0.32 weight part) and other additives (dispersant, lubricant, etc.: 0.30 weight part in total). The mixture was melted under heating and injected to prepare a brown test piece having embossed surface.

### [Comparison Example 2] - Preparation of brown sheet material from virgin material

The procedures of Example 3 were repeated except that the amounts of pigments were changed to 0.24 weight part for the white titanium dioxide pigment, 0.35 weight part for the iron black, 0.06 weight part for the red pigment, 0.16 weight part for the yellow pigment and 0.04 weight part for the blue pigment, to prepare a brown test piece having embossed surface.

### [Example 4] - Preparation of gray sheet material from virgin material

A mixture of 80 weight parts of polypropylene resin (fresh propylene-ethylene block copolymer: virgin material) and 20 weight parts of talc was mixed with a white titanium dioxide pigment (3.76 weight parts), iron black (1.92 weight parts), a red pigment (iron oxide red: 0.08 weight part), a yellow pigment (titanium yellow: 0.64 weight part), a blue pigment (ultramarine blue: 0.48 weight part) and other additives (dispersant, lubricant, etc.: 0.30 weight part in total). The mixture was melted under heating and injected to prepare a gray test piece having embossed surface.

### [Example 5] - Preparation of gray sheet material from virgin material

The procedures of Example 1 were repeated except for using no chromatic pigments (red pigment, yellow pigment and blue pigment), to prepare a gray test piece having embossed surface.

### [Comparison Example 3] - Preparation of gray sheet material from virgin material

The procedures of Example 4 were repeated except that the amounts of pigments were changed to 0.47 weight part for the white titanium dioxide pigment, 0.24 weight part for the iron black, 0.01 weight part for the red pigment, 0.08 weight part for the yellow pigment and 0.06 weight part for the blue pigment, to prepare a gray test piece having embossed surface.

### [Example 6] - Preparation of brown sheet material from virgin material

A mixture of 80 weight parts of polypropylene resin (fresh propylene-ethylene block copolymer: virgin material) and 20 weight parts of talc was mixed with a white titanium dioxide pigment (1.04 weight parts), iron black (3.84 weight parts), a red pigment (iron oxide red: 0.56 weight part), a yellow pigment (titanium yellow: 1.20 weight part), a blue pigment (ultramarine blue: 0.16 weight part) and other additives (dispersant, lubricant, etc.: 0.30 weight part in total). The resulting mixture was melted under heating and injected to prepare a brown test piece having embossed surface.

### [Comparison Example 4] - Preparation of brown sheet material from virgin material

The procedures of Example 6 were repeated except that the amounts of pigments were changed to 0.13 weight part for the white titanium dioxide pigment, 0.48 weight part for the iron black, 0.07 weight part for the red pigment, 0.15 weight part for the yellow pigment and 0.02 weight part for the blue pigment, to prepare a brown test piece having embossed surface.

### [Example 7] - Preparation of gray sheet material from recycling material

One hundred weight parts of polypropylene resin (obtained by pulverization of used household electric appliance made of propylene-ethylene block copolymer containing white pigment and black pigment in an amount not more than 1.0 wt.%, for each) were mixed with a white titanium dioxide pigment (4.100 weight parts), a black pigment (carbon black: 0.170 weight part), a red pigment (iron oxide red: 0.050 weight part), a yellow pigment (titanium yellow: 0.330 weight part), a blue pigment (ultramarine blue: 0.350 weight part) and other additives (dispersant, lubricant, etc.: 0.30 weight part in total). The mixture was melted under heating and injected to prepare a gray test piece having embossed surface.

### [Example 8] - Preparation of brown sheet material from recycling material

One hundreds weight parts of polypropylene resin (obtained by pulverization of the used household electric appliance comprising propylene-ethylene block copolymer which was the same as employed in Example 7) were mixed with a white titanium dioxide pigment: 2.250 weight parts), a black pigment (carbon black: 0.440 weight part), a red pigment (iron oxide red: 0.500 weight part), a yellow pigment (titanium yellow: 1.800 weight parts) and other additives (dispersant, lubricant, etc.: 0.30 weight part in total). The mixture was melted under heating and injected to prepare a brown test piece having embossed surface.

### [Example 9] - Preparation of gray sheet material from recycling material

A mixture of 80 weight parts of polypropylene resin (obtained by pulverization of the used household electric appliance comprising propylene-ethylene block copolymer which was the same as employed in Example 7) and 20 weight parts of talc was mixed with a white titanium dioxide pigment: 4.000 weight parts), a black pigment (carbon black: 0.160 weight part), a red pigment (iron oxide red: 0.040 weight part), a yellow pigment (titanium yellow: 0.430 weight parts), a blue pigment (ultramarine blue: 0.370 weight part) and other additives (dispersant, lubricant, etc.: 0.30 weight part in total). The resulting mixture was melted under heating and injected to prepare a brown test piece having embossed surface.

### [Example 10] - Preparation of brown sheet material from recycling material

A mixture of 80 weight parts of polypropylene resin (obtained by pulverization of the used household electric appliance comprising propylene-ethylene block copolymer which was the same as employed in Example 7) and 20 weight parts of talc was mixed with a white titanium dioxide pigment: 2.030 weight parts), a black pigment (carbon black: 0.460 weight part), a red pigment (iron oxide red: 0.570 weight part), a yellow pigment (titanium yellow: 1.930 weight parts) and other additives (dispersant, lubricant, etc.: 0.30 weight part in total). The resulting mixture was melted under heating and injected to prepare a brown test piece having embossed surface.

### [Evaluation: whether scratches are noticeable or not]

### (1) Method for examining whether scratches are noticeable or not

A solid weight (2 kg) having a sand paper (#80 sand paper) on its bottom surface was placed on each of the test pieces (color plates) prepared in Examples 1-10 and Comparison Examples 1-4. The solid weight was slid once on the surface of color plate forward and backward to produce scratches on the color plate.

Subsequently, the difference of lightness and color difference between in the scratched area and unscratched area were determined three times with respect to lightness L*, hue a* and hue b* (CIE 1976), using a spectrophotometer (light source: D-65, viewing angle: 10°) available from Kurashiki Spinning Co., Ltd. The difference of lightness (ΔL*) and the color difference (ΔE*) were converted to their average values.

### (2) Results of evaluation

The results of evaluation obtained in (1) above are set forth in Table 1.

**Table 1**

| Color plate | Difference of lightness (ΔL*) | Color difference (ΔE*) |
|---|---|---|
| Gray test piece (no talc) prepared from virgin material | | |
| Example 1 | 0.12 | 0.19 |
| Example 2 | 0.35 | 0.35 |
| Com.Ex. 1 | 1.64 | 1. 65 |
| | | |

| Brown test piece (no talc) prepared from virgin material | | |
|---|---|---|
| Example 3 | 0.76 | 0.77 |
| Com.Ex. 2 | 1.50 | 1.50 |
| | | |

| Gray test piece (talc in) prepared from virgin material | | |
|---|---|---|
| Example 4 | 2.03 | 2.03 |
| Example 5 | 2.04 | 2.08 |
| Com.Ex. 3 | 3.30 | 3.30 |
| | | |

| Brown test piece (talc in) prepared from virgin material | | |
|---|---|---|
| Example 6 | 3.01 | 3.04 |
| Com.Ex. 4 | 6.05 | 6.18 |
| | | |

| Test piece (no talc) prepared from recycling material | | |
|---|---|---|
| Example 7 | -0.12 | 0.34 |
| Example 8 | 0.19 | 0.23 |
| | | |

| Test piece (talc in) prepared from recycling material | | |
|---|---|---|
| Example 9 | 2.01 | 2.03 |
| Example 10 | 2.84 | 2.85 |

### (3) Summary of results of evaluation

The results set forth in Table 1 indicate that the scratches produced on the test pieces prepared from the polyolefin resin compositions of the invention are less noticeable as is apparent from the less difference of lightness and less color difference in any cases where the starting polyolefin resin is virgin polyolefin resin and is recycling polyolefin resin, and further the starting polyolefin resin contains filler (talc) or not.

In contrast, the scratches produced on the test pieces prepared from the polyolefin resin compositions containing white titanium dioxide pigment and black pigment in the conventionally adopted amounts are well noticeable as is apparent from the large difference of lightness and the large color difference.

## Claims

1. A polypropylene resin composition comprising a polypropylene resin, a white titanium dioxide pigment and a black pigment in which the white titanium dioxide pigment is contained in an amount of 1.1 to 6 weight parts per 100 weight parts of the polypropylene resin and the black pigment is carbon black in an amount of 0.1 to 1.0 weight part or iron black in an amount of 1.0 to 5 weight parts, each per 100 weight parts of the polypropylene resin, under such condition that the total amount of the white titanium dioxide pigment and black pigment is in the range of 3.0 to 7.0 weight parts, per 100 weight parts of the polypropylene resin.

2. The polypropylene resin composition of claim 1, which contains a chromatic pigment in an amount of 0.05 to 3.0 weight parts.

3. The polypropylene resin composition of any one of claims 1or 2, in which the polypropylene resin is virgin polypropylene resin.

4. The polypropylene resin composition of any one of claims 1 to 3, in which the polypropylene resin is a polypropylene resin obtained from a waste polypropylene resin article.

5. An article produced by moulding a polypropylene resin composition comprising a polypropylene resin, a white titanium dioxide pigment and a black pigment in which the white titanium dioxide pigment is contained in an amount of 1.1 to 6 weight parts per 100 weight parts of the polypropylene resin and the black pigment is carbon black in an amount of 0.1 to 1.0 weight part or iron black in an amount of 1.0 to 5 weight parts, each per 100 weight parts of the polypropylene resin, under such condition that the total amount of the white titanium dioxide pigment and black pigment is in the range of 3.0 to 7.0 weight parts, per 100 weight parts of the polypropylene resin.

6. The article of claim 5, in which the polypropylene resin composition contains a chromatic pigment in an amount of 0.05 to 3.0 weight parts.

7. The article of claim 5, which is in the form of sheet.

8. The article of claim 5, which is in the form of sheet having an embossed surface.

9. A composite material comprising an article of metal or ceramic material and a polyolefin resin composition layer coated on a surface of the article, in which the polyolefin resin composition layer comprises a polyolefin resin, a white titanium dioxide pigment and a black pigment in which the white titanium dioxide pigment and black pigment are contained in amounts of 1.1 to 6 weight parts and 0.1 to 5 weight parts, respectively, per 100 weight parts of the polyolefin resin, under such condition that the total amount of the white titanium dioxide pigment and black pigment is 2.0 weight parts or more.

10. The composite material of claim 9, in which the polyolefin resin is a polypropylene resin.

11. The composite material of claim 9, in which the polyolefin resin composition contains a chromatic pigment in an amount of 0.05 to 3.0 weight parts.

## Patentansprüche

1. Polypropylenharzzusammensetzung, umfassend ein Polypropylenharz, ein weißes Titandioxidpigment und ein schwarzes Pigment, wobei das weiße Titandioxidpigment in einer Menge von 1,1 bis 6 Gewichtsteilen je 100 Gewichtsteilen des Polypropylenharzes enthalten ist, und das schwarze Pigment Ruß in einer Menge von 0,1 bis 1,0 Gewichtsteilen oder Eisenschwarz in einer Menge von 1,0 bis 5 Gewichtsteilen, jeweils je 100 Gewichtsteilen des Polypropylenharzes, ist, unter Bedingungen dergestalt, dass die Gesamtmenge des weißen Titandioxidpigments und des schwarzen Pigments im Bereich von 3,0 bis 7,0 Gewichtsteilen je 100 Gewichtsteilen des Polypropylenharzes liegt.

2. Polypropylenharzzusammensetzung gemäß Anspruch 1, welche ein Farbpigment in einer Menge von 0,05 bis 3,0 Gewichtsteilen enthält.

3. Polypropylenharzzusammensetzung gemäß einem der Ansprüche 1 oder 2, wobei das Polypropylenharz rohes Polypropylenharz ist.

4. Polypropylenharzzusammensetzung gemäß einem der Ansprüche 1 bis 3, wobei das Polypropylenharz ein Polypropylenharz ist, welches aus einem Polypropylenharz-Abfallgegenstand erhalten wurde.

5. Gegenstand, hergestellt durch Formen einer Polypropylenharzzusammensetzung, umfassend ein Polypropylenharz, ein weißes Titandioxidpigment und ein schwarzes Pigment, wobei das weiße Titandioxidpigment in einer Menge von 1,1 bis 6 Gewichtsteilen je 100 Gewichtsteilen des Polypropylenharzes enthalten ist, und das schwarze Pigment Ruß in einer Menge von 0,1 bis 1,0 Gewichtsteilen oder Eisenschwarz in einer Menge von 1,0 bis 5 Gewichtsteilen, jeweils je 100 Gewichtsteilen des Polypropylenharzes, ist, unter Bedingungen dergestalt, dass die Gesamtmenge des weißen Titandioxidpigments und des schwarzen Pigments im Bereich von 3,0 bis 7,0 Gewichtsteilen je 100 Gewichtsteilen des Polypropylenharzes liegt.

6. Gegenstand gemäß Anspruch 5, wobei die Polypropylenharzzusammensetzung ein Farbpigment in einer Menge von 0,05 bis 3,0 Gewichtsteilen enthält.

7. Gegenstand gemäß Anspruch 5, welcher in Form einer Folie ist.

8. Gegenstand gemäß Anspruch 5, welcher in der Form einer Folie mit einer geprägten Oberfläche ist.

9. Verbundmaterial, umfassend einen Gegenstand aus Metall oder keramischem Material und eine Polyolefinharzzusammensetzungsschicht, aufgetragen auf eine Oberfläche des Gegenstands, wobei die Polyolefinharzzusammensetzungsschicht ein Polyolefinharz, ein weißes Titandioxidpigment und ein schwarzes Pigment umfasst, wobei das weiße Titandioxidpigment und das schwarze Pigment in Mengen von 1,1 bis 6 Gewichtsteilen bzw. 0,1 bis 5 Gewichtsteilen je 100 Gewichtsteilen des Polyolefinharzes enthalten sind, unter Bedingungen dergestalt, dass die Gesamtmenge des weißen Titandioxidpigments und des schwarzen Pigments 2,0 Gewichtsteile oder mehr beträgt.

10. Verbundmaterial gemäß Anspruch 9, wobei das Polyolefinharz ein Polypropylenharz ist.

11. Verbundmaterial gemäß Anspruch 9, wobei die Polyolefinharzzusammensetzung ein Farbpigment in einer Menge von 0,05 bis 3,0 Gewichtsteilen enthält.

## Revendications

1. Composition à base de résine polypropylène comprenant une résine polypropylène, un pigment de dioxyde de titane blanc et un pigment noir dans laquelle le pigment de dioxyde de titane blanc est contenu en une quantité de 1,1 à 6 parties en poids pour 100 parties en poids de la résine polypropylène et le pigment noir est le noir de carbone en une quantité de 0,1 à 1,0 partie en poids ou le noir de fer en une quantité de 1,0 à 5 parties en poids, dans chaque cas pour 100 parties en poids de la résine polypropylène, dans des conditions telles que la quantité totale du pigment de dioxyde de titane blanc et du pigment noir se trouve dans la plage de 3,0 à 7,0 parties en poids, pour 100 parties en poids de la résine polypropylène.

2. Composition à base de résine polypropylène selon la revendication 1, qui contient un pigment chromatique en une quantité de 0,05 à 3,0 parties en poids.

3. Composition à base de résine polypropylène selon l'une quelconque des revendications 1 et 2, dans laquelle la résine polypropylène est une résine polypropylène vierge.

4. Composition à base de résine polypropylène selon l'une quelconque des revendications 1 à 3, dans laquelle la résine polypropylène est une résine polypropylène obtenue d'un article usé en résine polypropylène.

5. Article produit par moulage d'une composition à base de résine polypropylène comprenant une résine polypropylène, un pigment de dioxyde de titane blanc et un pigment noir dans laquelle le pigment de dioxyde de titane blanc est contenu en une quantité de 1,1 à 6 parties en poids pour 100 parties en poids de la résine polypropylène et le pigment noir est le noir de carbone en une quantité de 0,1 à 1,0 partie en poids ou le noir de fer en une quantité de 1,0 à 5 parties en poids, dans chaque cas pour 100 parties en poids de la résine polypropylène, dans des conditions telles que la quantité totale du pigment de dioxyde de titane blanc et du pigment noir se trouve dans la plage de 3,0 à 7,0 parties en poids, pour 100 parties en poids de la résine polypropylène.

6. Article selon la revendication 5, dans lequel la composition à base de résine polypropylène contient un pigment chromatique en une quantité de 0,05 à 3,0 parties en poids.

7. Article selon la revendication 5, qui se trouve sous la forme d'une feuille.

8. Article selon la revendication 5, qui se trouve sous la forme d'une feuille ayant une surface bosselée.

9. Matériau composite comprenant un article en un matériau métallique ou céramique et une couche de composition à base de résine polyoléfine revêtue sur une surface de l'article, dans lequel la couche de composition à base de résine polyoléfine comprend une résine polyoléfine, un pigment de dioxyde de titane blanc et un pigment noir dans laquelle le pigment de dioxyde de titane blanc et le pigment noir sont contenus en quantités de 1,1 à 6 parties en poids et de 0,1 à 5 parties en poids, respectivement, pour 100 parties en poids de la résine polyoléfine, dans des conditions telles que la quantité totale du pigment de dioxyde de titane blanc et du pigment noir est de 2,0 parties en poids ou plus.

10. Matériau composite selon la revendication 9, dans lequel la résine polyoléfine est une résine polypropylène.

11. Matériau composite selon la revendication 9, dans lequel la composition à base de résine polyoléfine contient un pigment chromatique en une quantité de 0,05 à 3,0 parties en poids.
